# EUROPÄISCHE PATENTSCHRIFT

(11) **EP 1 332 314 B1**
(45) Veröffentlichungstag und Bekanntmachung des Hinweises auf die Patenterteilung: **01.09.2004**
(21) Anmeldenummer: 01992859.7
(22) Anmeldetag: 02.10.2001
(51) Int. Cl.: F16L 41/06, F16L 47/00

(54) **SELBSTANBOHRSCHELLE**
SELF-TAPPING CLAMP
BRIDE DE FIXATION AUTOPER ABLE

(30) Priorität: 04.11.2000 DE 10054705
(43) Veröffentlichungstag der Anmeldung: 06.08.2003
(73) Patentinhaber: AVK Mittelmann Armaturen GmbH, 42489 Wülfrath (DE)
(72) Erfinder: MÄRKL, Richard, 85244 Arzbach (DE)
(74) Vertreter: Sparing, Rolf Klaus
(86) Internationale Anmeldenummer: PCT/DE2001/003820
(87) Internationale Veröffentlichungsnummer: WO 2002/037017

(56) Entgegenhaltungen:
- EP-A- 0 702 188
- DE-A- 19 531 913
- DE-A- 19 641 803

## Beschreibung

Die Erfindung betrifft eine Selbstanbohrschelle nach dem Oberbegriff des Anspruchs 1.

Bei der Erschließung von Grundstücken zur späteren Bebauung ist es üblich, zunächst Hauptrohrleitungen, z.B. zur Führung eines Mediums wie Gas oder Wasser unter der Erdoberfläche zu verlegen, wobei unter Umständen erst Jahre später entsprechende Abzweige zur Versorgung von Gebäuden in Betrieb genommen werden. Zu diesem Zeitpunkt ist die Erstellung eines Abzweiges von der Hauptrohrleitung nur durch erneute Ausschachtung der Hauptrohrleitung an der Abzweigstelle möglich, was mit erheblichem Aufwand verbunden ist. Daher ist es in der Praxis üblich, bereits bei Verlegen der Hauptrohrleitungen entsprechende Abzweigstellen vorzusehen. Bezüglich dieser Abzweigstellen besteht grundsätzlich die Alternative, eine Anbohrung der Hauptrohrleitung bereits bei Anbringung der Abzweigstellen vorzunehmen oder diese Anbohrung erst zum Zeitpunkt der Inbetriebnahme der Abzweigung vorzunehmen. Im ersten Fall erhöhen sich die Kosten bei der Verlegung der Hauptrohrleitung erheblich, was unter anderem durch kostenintensive Standzeiten von Ausschachtungsgerät verursacht wird. Im Falle von Trinkwasserleitungen befindet sich zudem nach dem Anbohren Wasser in Hohlräumen des Abzweigventils, was einer Kontamination des Abzweigventils mit Keimen und Schmutz Vorschub leistet. Entsprechend der zweiten Alternative sind aus der Praxis Selbstanbohrschellen für Kunststoffrohre bekannt, die bei Verlegung der Hauptrohrleitung mit geringem Aufwand an der Hauptrohrleitung befestigt werden und neben einem Absperrventil ein Bohrelement enthalten, welches bei einer späteren Inbetriebnahme des Abzweigs zunächst dafür benutzt wird, die Hauptrohrleitung anzubohren. Dabei wird mittels einer Bedienspindel ein Bohrkopf im Stirnbereich eines Absperrventils erstmalig auf die Rohrleitung abgesenkt, so daß der Bohrkopf ein Loch in den Mantel des Rohres schneidet. Im weiteren Betrieb kann mittels der gleichen Bedienspindel der Abzweig durch das Absperrventil gesperrt oder wieder geöffnet werden.

DE 42 17 982 A1 beschreibt eine Anbohramatur mit kombiniertem Ventil, bei dem ein Bohrelement starr auf der Stirnfläche eines Absperrventils festgelegt ist, so daß bei einem Senken eines Absperrventils zunächst das Bohrelement den Mantel des Rohrs durchstößt, und bei einem weiteren Absenken das Absperrventil das Rohr abdichtet. Vorrichtungen dieser Art sind lediglich dazu geeignet, den Mantel von Kunststoffrohren anzubohren. Im Falle von Kunststoff ist es beim Anbohren möglich, einem gegebenen Drehwinkel des Bohrers einen wesentlich höheren Vorschub zuzuordnen als bei Stahl- oder Gußrohren. Bei der Anbohrung von harten Materialien wie Guß, Stahl oder Guß mit Zementmörtelumhüllung ist die Anzahl von Bohrerumdrehungen für einen gegebenen Vorschub nicht festlegbar. Vielmehr ist es erforderlich, einen Bohrer mit einem möglichst konstanten Anpressdruck beliebig viele Umdrehungen machen zu lassen, bis der Mantel eines Rohrs aus Guß, Stahl oder Guß mit Zementmörtelumhüllung oder einem anderen harten Material durchbohrt ist.

DE 195 31 913 A1 beschreibt eine Anbohrarmatur für vorzugsweise unter Mediendruck stehende Versorgungsleitungen aus Kunststoff, bei dem ein in einem Gewinde aufgenommenes, über eine Bedienspindel drehbares und mittels der Drehbewegung in dem Gewinde auch axial bewegliches Ventilelement mit einem Bohrkopf zum Anbohren der Versorgungsleitung aus Kunststoff fest verbunden ist. An einer drehmomentschlüssigen Verbindung des Ventilelements mit der Bedienspindel ist eine Überlastkupplung vorgesehen, um zur Vermeidung von Beschädigungen bei einem Überschreiten eines maximalen Drehmoments der Bedienspindel die drehmomentschlüssige Verbindung zwischen Bedienspindel und Ventilelement aufzuheben.

DE 31 07 648 C1 beschreibt eine Anbohrarmatur, bei der ein in einem Gewinde drehbar aufgenommenes und mittels einer Drehung in dem Gewinde auch axial bewegliches sowie mittels einer Bedienspindel antreibbares Bohrelement vorgesehen ist, wobei das in seinem unteren Abschnitt im wesentlichen zylindrische Bohrelement von einem im wesentlichen hohlzylinderförmigen Ventilelement umfangen ist. Das Ventilelement kann ist dabei axial auf dem Bohrelement gleitend beweglich, wobei federbelastete Rastmittel zur axialen Arretierung bestimmter Positionen des Ventilelements relativ zum Bohrelement vorgesehen sind. Dabei ist einer Drehung der Bedienspindel um einen bestimmten Winkel ein bestimmter axialer Vortrieb des Bohrelements jederzeit fest zugeordnet.

DE 196 41 803 C2 beschreibt eine Anbohrarmatur für eine unter Mediendruck stehende Rohrleitung mit einem absperrbaren Ventil, bei der ein mittels einer Bedienspindel drehantreibbares, im wesentlichen zylindrisches Bohrelement mit einem Außengewinde mit einer ersten Steigung in einem Innengewinde eines hohlzylindrisch ausgeformten Ventilschiebers aufgenommen ist, wobei der Ventilschieber seinerseits mit einem Außengewinde mit einer zweiten Steigung in einem Innengewinde eines Gehäuses der Anbohrarmatur aufgenommen ist. Dabei ist einer Drehung der Bedienspindel um einen bestimmten Winkel jederzeit ein axialer Vortrieb des Bohrelements zugeordnet, der mindestens einer kleineren der beiden Steigungen entspricht.

DE 38 20 762 A1 beschreibt eine Anbohrvorrichtung für Rohrleitungen, bei der ein ein Bohrelement umfassendes Bohrgerät zur Anbohrung der Leitung an einem Anbohrstutzen festlegbar ist. Nach Anbohrung der Leitung wird das Anbohrgerät wieder entfernt und der Anbohrstutzen mittels eines Schieberelements oder eines Stopfens verschlossen.

Es ist die Aufgabe der Erfindung, eine Selbstanbohrschelle nach dem Oberbegriff des Anspruchs 1 zu schaffen, die zum Anbohren von Rohren unterschiedlichster Materialien, insbesondere harter Materialien wie Guß, Stahl oder Guß mit Zementmörtelumhüllung, geeignet ist.

Diese Aufgabe wird für die eingangs genannte Selbstanbohrschelle erfindungsgemäß mit den kennzeichnenden Merkmalen des Anspruchs 1 gelöst.

Dadurch wird vorteilhaft erreicht, daß bei Drehung der Bedienspindel im Falle eines noch nicht angebohrten Rohres von einem Betriebszustand als Absperrventil in einen Betriebszustand als Bohrer gewechselt werden kann, um eine beliebige Anzahl von Bohrerumdrehungen unabhängig von einem mitbewegten Absperrventil durchführen zu können.

Vorzugsweise sind dabei das Absperrventil und das Bohrelement konzentrisch um eine gemeinsame Achse angeordnet. Bei Drehung der Bedienspindel wird das Bohrelement nun zunächst mit dem Absperrventil axial mitbewegt, nach Aufsetzen auf den Mantel des Rohrs wird das Bohrelement jedoch vom Absperrventil drehmomententkoppelt, so daß eine reine Drehbewegung des Bohrelements ohne eine gleichzeitige Bewegung des Absperrventils stattfindet. Nach Erreichung einer gewissen Bohrtiefe wird wiederum ein Drehmomentschluß zwischen Absperrventil und Bohrelement hergestellt, so daß mittels eines weiteren Absenkens des Absperrventils ein weiterer Vorschub des Bohrelements ermöglicht wird. Nach Durchbohrung des Rohrs kann das Bohrelement nicht mehr aufsetzen, so daß eine ständige drehmomentschlüssige Verkoppelung von Bohrelement und Absperrventil gewährleistet ist. Im Moment der Durchstoßung des Rohrs ist das Absperrventil noch in geöffneter Stellung, so daß der eintretende Fluß des unter Druck stehenden Mediums die Bohrspäne aus einer Anschlußöffnung der Selbstanbohrschelle abführt, womit vorteilhaft vermieden wird, daß Bohrspäne in die Rohrleitung gelangen können. Im Falle der Anbohrung von Wasserleitungen in Gebieten mit großer Wasserhärte kann es vorkommen, daß die Anbohrstelle sich mit der Zeit durch harte Kalkablagerungen wieder verschließt, was bei Einsatz der vorliegenden Erfindung vorteilhaft durch einfaches Schließen und erneutes Öffnen des Absperrventils beseitigt werden kann.

In einer bevorzugten Ausführungsform wird eine auf das Bohrelement wirkende axiale Kraft, die den zum Anbohren notwendigen Andruck bewirkt und möglichst konstant sein soll, durch ein Federelement vermittelt, welches das Bohrelement axial gegen das Absperrventil abstützt.

Zur Erlangung eines ausreichend großen Andrucks des Bohrkopfs, insbesondere zum Anbohren von harten Materialien wie Guß, Stahl oder Guß mit Zementmörtelumhüllung, ist das Federelement bevorzugt als Tellerfeder ausgeführt, wogegen bei der Anbohrung von weichen Materialien, insbesondere Kunststoff, zur Vermeidung eines zu hohen Andrucks des Bohrkopfs das Federelement als Spiralfeder ausgebildet sein kann.

Weiterhin ist bevorzugt zumindest auf der einen Seite des Federelements zur Verbesserung der Gleitfähigkeit des Federelements bei der relativen Drehbewegung zwischen Bohrelement und Absperrventil ein Lagermittel vorgesehen, das aus einem Kugellager, einem Rollenlager oder einer Gleitscheibe aus einem geeigneten Material wie insbesondere Kunststoff oder Bronze bestehen kann.

In einer bevorzugten Ausführungsform des Schellengehäuses ist das Schellengehäuse zweiteilig ausgelegt, wobei die beiden Teile mittels eines Innengewindes am einen Teil, eines Außengewindes am anderen Teil sowie Gehäusedichtungen verschraubbar sind, um eine besonders einfache Montage der Selbstanbohrschelle zu ermöglichen. Weiterhin ist es vorgesehen, daß die Bedienspindel an der Stelle, an der sie das Schellengehäuse durchstößt, gegen das Schellengehäuse abgedichtet ist und außerdem über axiale Längsflächen in das Bohrelement eingreift, so daß zwar eine Drehbewegung auf das Bohrelement übertragbar ist, die axiale Position der Bedienspindel gegenüber dem Schellengehäuse jedoch auch bei axialer Verschiebung von Absperrventil und Bohrelement unveränderlich ist.

Vorteilhaft ist am Bohrelement ein Bohrkopf verschraubbar festgelegt. Dies ermöglicht bei Serienfertigung der Selbstanbohrschelle eine hohe Flexibilität hinsichtlich des verwendeten Bohrkopfs. So kann z.B. für die Anbohrung von Guß- oder Stahlrohren ein Spiralbohrer und für die Anbohrung von Kunststoffrohren ein topfförmiger Fräskopf aufgesetzt werden.

Eine zweite Anschlußöffnung zum Anschluß eines Abzweigrohres an die Hauptrohrleitung ist vorzugsweise seitlich am Schellengehäuse weggeführt, so daß das Abzweigrohr mit der Hauptrohrleitung einen rechten Winkel bildet.

Die Festlegung der Selbstanbohrschelle an der Hauptrohrleitung geschieht vorzugsweise Mittels zweier seitlich an der Selbstanbohrschelle angebrachter Kalottenbügel, in denen zwei Gewindebolzen fixiert sind, die ihrerseits mit einem die Hauptrohrleitung umfassenden Halteblech verbunden sind, um so eine besonders einfache und kostengünstige Festlegung der Selbstanbohrschelle zu ermöglichen. Alternativ dazu kann es vorgesehen sein, daß die Selbstanbohrschelle mittels einer die Hauptrohrleitung auf ihrer gegenüberliegenden Seite zumindest teilweise umgreifenden Unterschelle und zweier Schellenschrauben an der Hauptrohrleitung festgelegt ist.

In einer weiteren Ausführungsform der Erfindung ist es vorgesehen, daß die Bedienspindel durch einen Motor drehbar ist. Dabei handelt es sich vorzugsweise um einen lösbar an der Bedienspindel festlegbaren Elektromotor, der jeweils für die Anbohrung des Rohrs angebracht wird, da eine manuelle Betätigung des Bedienspindel zumindest bei der Anbohrung von Rohren aus hartem Material zeitaufwendig und körperlich anstrengend sein kann.

Weitere Vorteile und Merkmale der Erfindung ergeben sich aus dem nachfolgend beschriebenen Ausführungsbeispiel sowie aus den abhängigen Ansprüchen.

Die Erfindung ist nachfolgend anhand eines bevorzugten Ausführungsbeispiels, das in der anliegenden Zeichnung dargestellt ist, näher erläutert. In der Zeichnung zeigt
- Fig. 1: einen Längsschnitt durch die Selbstanbohrschelle mit dem Absperrventil in geschlossenem Zustand;
- Fig. 2: einen Längsschnitt durch die Selbstanbohrschelle mit dem Absperrventil in geöffnetem Zustand;
- Fig. 3: einen Querschnitt durch das Kupplungselement der Selbstanbohrschelle und
- Fig. 4: einen Querschnitt durch das Kupplungselement aus Fig. 3 entlang der eingezeichneten Querschnittlinie III-III.

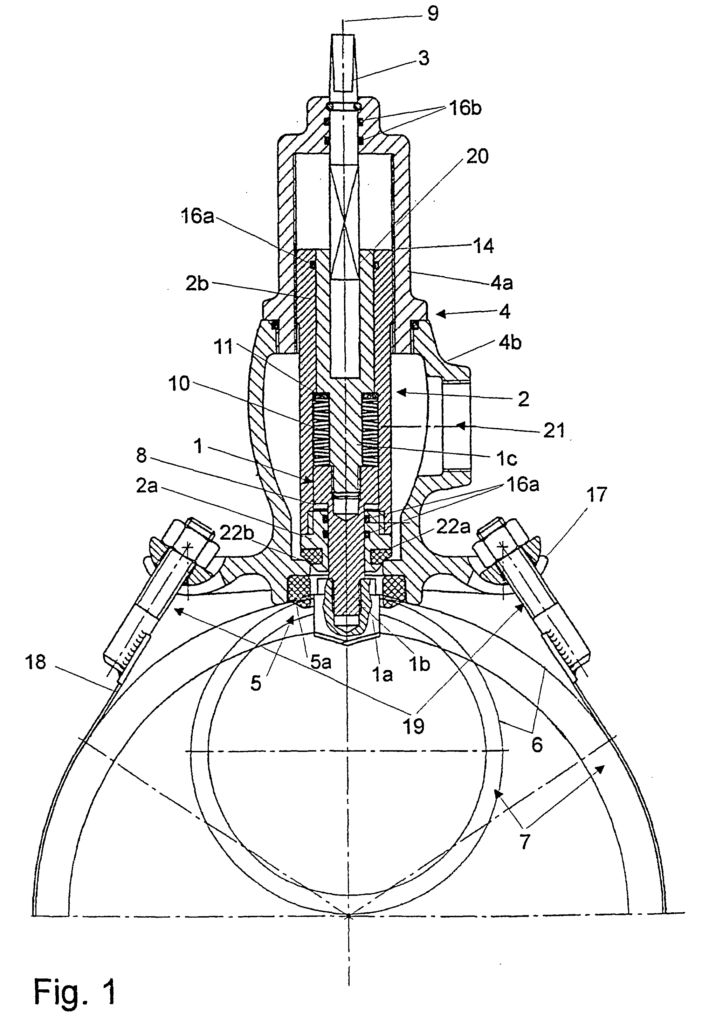

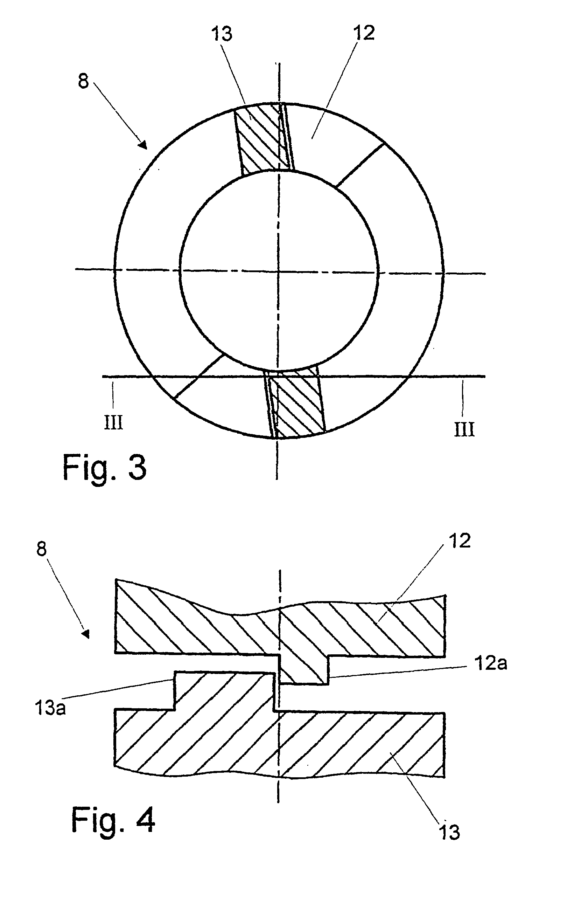

Wie die Darstellung in Fig. 1 zeigt, besteht die Selbstanbohrschelle aus einem Schellengehäuse, das aus einer ersten Hälfte 4a und einer zweiten Hälfte 4b verschraubbar zusammengesetzt ist. Das Schellengehäuse nimmt ein Bohrelement 1, ein Absperrventil 2 und eine Bedienspindel 3 auf und ist mittels zweier Kalottenbügel 17, einem Halteblech 18 und zweier Gewindebolzen 19 mit einer ersten Anschlußöffnung 5 und einer Anschlußdichtung 5a an einem Rohr 7 dichtend festgelegt. Das Bohrelement 1, das Absperrventil 2 und die Bedienspindel 3 sind koaxial zu einer gemeinsamen Achse 9 angeordnet, wobei die Bedienspindel 3 in das Bohrelement 1 über axiale Längsflächen 20 eingreift, so daß eine Drehbewegung der Bedienspindel 3 auf das Bohrelement 1 übertragen wird, das Bohrelement 1 aber axial unabhängig von der Bedienspindel 3 bewegbar ist. Das Bohrelement 1 ist aus einem Bohrkopf 1a, einer mit dem Bohrkopf 1a verschraubbaren unteren Bohrelementhälfte 1b und einer mit der unteren Bohrelementhälfte 1b verschraubbaren oberen Bohrelementhälfte 1c zusammengesetzt. Das Absperrventil 2 ist aus einer unteren Absperrventilhälfte 2a und einer oberen Absperrventilhälfte 2b verschraubbar zusammengesetzt. Dabei ist das Absperrventil 2 im wesentlichen nach Art eines Hohlzylinders aufgebaut, der in seinem Inneren das Bohrelement 1 aufnimmt. Es ist weiterhin ein Federelement 10 mit Lagermitteln 11 vorgesehen, so daß das Bohrelement 1 und das Absperrventil 2 in axialer Richtung von diesem Federelement 10 auseinandergerückt werden, wobei die Lagermittel 11 die Reibung des Federelements 10 bei einer relativen Drehbewegung zwischen Bohrelement 1 und Absperrventil 2 vermindern. Dabei wird ein Anschlag, der die axiale Relativbewegung von Bohrelement 1 und Absperrventil 2 zueinander begrenzt, durch ein Kupplungselement 8 definiert. Ein Ausführungsbeispiel des Kupplungselements ist in den Fig. 3 und 4 dargestellt. Das Kupplungselement 8 ist durch zwei Klinkenringe 12, 13 ausgebildet, wobei sich ein erster Klinkenring 13 an der unteren Bohrelementhälfte 1b und ein zweiter Klinkenring 12 an der unteren Absperrventilhälfte 2a befindet. Die beiden Klinkenringe 12, 13 haben jeweils klinkenförmige Vorsprünge 12a, 13a, die in dem Fall, daß sich das Bohrelement 1 zu dem Absperrventil 2 im Anschlag befindet, ineinander eingreifen, so daß bei Drehung der Bedienspindel 3 das Absperrventil 2 über das Bohrelement 1 drehmomentschlüssig mitgenommen wird.

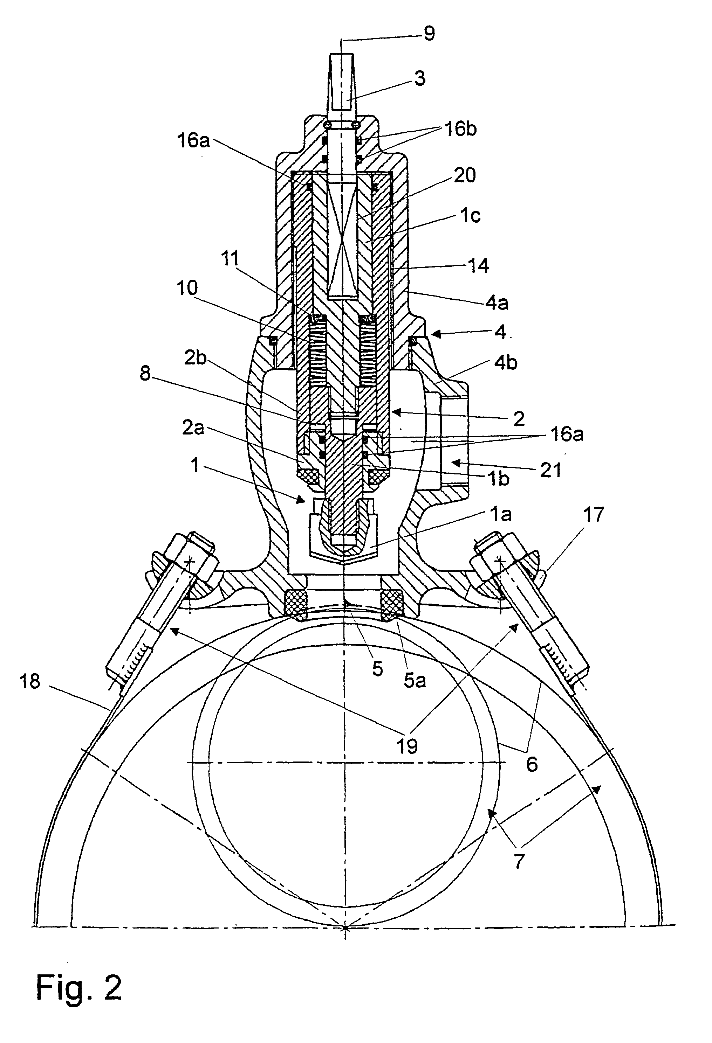

Nachfolgend wird die Funktion der vorgeschlagenen Selbstanbohrschelle erläutert. Zunächst befindet sich die Selbstanbohrschelle in einer in Fig. 2 dargestellten Ausgangsposition, bei der das Absperrventil 2 und das Bohrelement 1 zurückgezogen sind und das Rohr 7 noch nicht angebohrt ist. Das Absperrventil 2 ist am Schellengehäuse 4 in einem Gewinde 14 aufgenommen, so daß bei Betätigung der Bedienspindel 3 im entsprechenden Drehsinn das Bohrelement 1 sowie mittels der drehmomentschlüssigen Koppelung auch das Absperrventil 2 mitgedreht wird, was bedingt durch das Gewinde 14 zu einem Absenken von Absperrventil 2 und dem in diesem aufgenommenen Bohrelement 1 führt. Dabei durchfährt der Bohrkopf 1a die erste Anschlußöffnung 5 und setzt auf dem Mantel 6 des Rohrs 7 auf. Bedingt durch die Abstützung des Bohrkopfs 1a auf dem Mantel 6 verfährt nun das Absperrventil 2 bei weiterer Drehung der Bedienspindel 3 axial relativ gegen das Bohrelement 1. Dabei wird das Federelement 10 zusammengedrückt. Nach Überschreiten des Sicherheitshubs, der sich aus der maximalen Überlappung der Klinken 12a, 13a am Kupplungselement 8 ergibt, greifen die Klinkenringe 12, 13 nicht mehr ineinander ein, so daß nur noch das Bohrelement 1 von der Bedienspindel 3 gedreht wird, während das Absperrventil 2 keine Drehbewegung und somit auch keine axiale Bewegung mehr vollführt. In diesem Betriebszustand wird das Bohrelement 1 durch das Federelement 10 mit einem weitgehend konstanten Andruck versehen und solange gedreht, bis eine entsprechende Vertiefung im Mantel 6 des Rohrs 7 ausgebohrt ist. Bedingt durch die ausgebohrte Vertiefung steht das Bohrelement 1 nun tiefer, so daß die Klinkenringe 12, 13 wieder ineinander eingreifen, was zu einer Drehung und weiteren Absenkung des Absperrventils 2 führt. Auf diese Weise wird der Mantel 6 des Rohrs 7 sukzessive durchbohrt. Nach Durchstoßen des Rohrs 7 liegt kein Anpressdruck am Bohrkopf 1a mehr vor, so daß sich das Bohrelement 1 und das Absperrventil 2 von nun an mittels des Kupplungselements 8 und des Federelements 10 permanent in Eingriff befinden. Beim Vorgang des Bohrens hat sich ausgebohrtes Material im Bereich der ersten Anschlußöffnung 5 und in Bohrkammern des Bohrkopfs 1a gesammelt. Da das Rohr 7 unter Mediumdruck steht, wird im Moment des Durchstossens des Mantels 6 das ausgebohrte Material durch das Austreten des Mediums mitgeführt und durch eine Anschlußöffnung 21 ausgespült. Im durchbohrten Zustand des Rohrs 7 kann durch Drehung der Bedienspindel 3 das Absperrventil 2 auf die erste Anschlußöffnung 5 abgesenkt werden, so daß mittels einer zum Innenraum des Schellengehäuses 4 gerichteten Dichtungsfläche 22b und einer an der unteren Hälfte 2a des Absperrventils 2 vorgesehenen Ringdichtung 22a das Rohr 7 verschlossen werden kann. Durch entsprechend entgegengesetzte Drehbewegung der Bedienspindel 3 kann das Absperrventil 2 wieder zurückgezogen so das Rohr 7 geöffnet werden. Um eine dauerhafte Abdichtung zwischen dem im Rohr 7 geführten Medium, korrosionempfindlicher Teile der Selbstanbohrschelle und dem Außenbereich zu gewährleisten, ist das Bohrelement 1 mittels eines ersten Satzes von Ringdichtungen 16a gegen das Absperrventil 2 und die Bedienspindel 3 mittels eines zweiten Satzes von Ringdichtungen 16b gegen das Schellengehäuse 4 abgedichtet.

## Patentansprüche

1. Selbstanbohrschelle zum Anbohren von Rohren, umfassend
ein Bohrelement (1),
ein Absperrventil (2),
eine drehbare Bedienspindel (3), mittels derer das Absperrventil (2) bedienbar und das Bohrelement (1) antreibbar ist,
ein Schellengehäuse (4) mit mindestens zwei Anschlußöffnungen, wobei das Schellengehäuse (4) mit einer ersten Anschlußöffnung (5) dichtend auf einer Mantelfläche (6) eines Rohrs (7) festlegbar ist und das Schellengehäuse (4) das Bohrelement (1) und das Absperrventil (2) aufnimmt,
wobei einer Drehbewegung des Absperrventils (2) um eine Drehachse eine Zwangsbewegung des Absperrventils (2) in Richtung der Drehachse fest zugeordnet ist,
**dadurch gekennzeichnet,**
**daß** mittels eines Kupplungselements (8) das Bohrelement (1) und das Absperrventil (2) drehmomentschlüssig untereinander koppelbar und entkoppelbar sind, und daß das Bohrelement (1) unabhängig von einer Drehbewegung des Bohrelements (1) axial bewegbar ist.

2. Selbstanbohrschelle nach Anspruch 1, **dadurch gekennzeichnet, daß** das Bohrelement (1) und das Absperrventil (2) konzentrisch um eine Achse (9) angeordnet und in Richtung dieser Achse (9) bewegbar sind.

3. Selbstanbohrschelle nach Anspruch 2, **dadurch gekennzeichnet, daß** die Drehbewegung der Bedienspindel (3) auf das Bohrelement (1) mittels formschlüssiger Mittel, insbesondere axial gerichteter Längsflächen (20) übertragbar ist.

4. Selbstanbohrschelle nach Anspruch 2 oder 3, **dadurch gekennzeichnet, daß** das Bohrelement (1) in dem Absperrventil (2) axial beweglich zu dem Absperrventil (2) aufgenommen ist.

5. Selbstanbohrschelle nach einem der Ansprüche 2 bis 4, **dadurch gekennzeichnet, daß** das Bohrelement (1) aus einer unteren Bohrelementhälfte (1b) und einer mit dieser formschlüssig verbundenen oberen Bohrelementhälfte (1c) besteht.

6. Selbstanbohrschelle nach einem der Ansprüche 2 bis 5, **dadurch gekennzeichnet, daß** das Absperrventil (2) aus einer unteren Absperrventilhälfte (2a) und einer mit dieser verschraubbaren oberen Absperrventilhälfte (2b) besteht.

7. Selbstanbohrschelle nach einem der Ansprüche 4 bis 6, **dadurch gekennzeichnet, daß** das Bohrelement (1) und das Absperrventil (2) mittels eines Federelements (10) mit einer Kraft beaufschlagt sind, die das Bohrelement (1) und das Absperrventil (2) in axialer Richtung auseinander drückt.

8. Selbstanbohrschelle nach Anspruch 7, **dadurch gekennzeichnet, daß** das Federelement (10) in einer zu der Achse (9) konzentrischen Aussparung aufgenommen ist und axial einerseits am Absperrventil (2) und andererseits am Bohrelement (1) abgestützt ist.

9. Selbstanbohrschelle nach Anspruch 8, **dadurch gekennzeichnet, daß** das Federelement (10) als Tellerfeder ausgebildet ist.

10. Selbstanbohrschelle nach Anspruch 8, **dadurch gekennzeichnet, daß** das Federelement (10) als Spiralfeder ausgebildet ist.

11. Selbstanbohrschelle nach einem der Ansprüche 7 bis 10, **dadurch gekennzeichnet, daß** zumindest zwischen dem Federelement (10) und einem der Teile, Bohrelement (1) und Absperrventil (2), ein Lagermittel (11) eingelegt ist.

12. Selbstanbohrschelle nach Anspruch 11, **dadurch gekennzeichnet, daß** das Lagermittel (11) ein Kugel- oder ein Rollenlager ist.

13. Selbstanbohrschelle nach Anspruch 11, **dadurch gekennzeichnet, daß** das Lagermittel (11) eine Gleitscheibe aus Kunststoff, Bronze oder einem anderen geeigneten Material ist.

14. Selbstanbohrschelle nach einem der Ansprüche 7 bis 13, **dadurch gekennzeichnet, daß** durch das Kupplungselement (8) zugleich ein Anschlag ausgebildet ist, bis zu dem das Bohrelement (1) und das Absperrventil (2) durch das Federelement (10) axial auseinander gedrückt werden.

15. Selbstanbohrschelle nach Anspruch 14, **dadurch gekennzeichnet, daß** in dem durch das Kupplungselement ausgebildeten Anschlag eine drehmomentschlüssige Koppelung von dem Bohrelement (1) und dem Absperrventil (2) durch das Kupplungselement (8) besteht.

16. Selbstanbohrschelle nach einem der Ansprüche 2 bis 15, **dadurch gekennzeichnet, daß** das Kupplungselement (8) aus einem ersten, an dem Bohrelement (1) ausgebildeten Klinkenring (12) und einem zweiten, an dem Absperrventil (2) ausgebildeten und dem ersten Klinkenring (12) gegenüberliegenden Klinkenring (13) mit jeweils axial vorstehenden Klinken (12a, 13a) besteht, wobei die Klinkenringe (12, 13) bei geeigneter Winkelstellung zueinander und bei entsprechender axialer Stellung des Bohrelements (1) zum Absperrventil (2) drehmomentschlüssig in einander eingreifen.

17. Selbstanbohrschelle nach Anspruch 16, **dadurch gekennzeichnet, daß** an dem Kupplungsement (8) ein Sicherheitshub vorgesehen ist, der bei im Anschlag befindlichem Absperrventil und Bohrelement durch die gegenseitige Überlappung der Klinken (12a, 13a) der gegenüberliegenden Klinkenringe (12, 13) definiert ist, so daß bei axialem Verschieben des Bohrelements (1) gegen das Absperrventil (2) entgegen der Kraft des Federelements (10) ausgehend vom Anschlag um einen Hub kleiner dem Sicherheitshub die drehmomentschlüssige Koppelung von Bohrelement (1) und Absperrventil (2) bestehen bleibt, und daß nach axialem Verschieben um einen Hub größer als der Sicherheitshub das Absperrventil (2) und das Bohrelement (1) entkoppelt sind.

18. Selbstanbohrschelle nach einem der Ansprüche 2 bis 17, **dadurch gekennzeichnet, daß** am Bohrelement (1) ein Bohrkopf (1a) als separates, mit der unteren Bohrelementhälfte (1b) formschlüssig verbundenes Bauteil ausgebildet ist.

19. Selbstanbohrschelle nach einem der Ansprüche 2 bis 18, **dadurch gekennzeichnet, daß** das Absperrventil (2) am Schellengehäuse (4) mittels eines Gewindes (14) aufgenommen ist, wobei das Gewinde (14) konzentrisch zu der Achse (9) verläuft, so daß bei Drehung des Absperrventils (2) das Absperrventil (2) auch axial bewegt wird.

20. Selbstanbohrschelle nach einem der Ansprüche 2 bis 19, **dadurch gekennzeichnet, daß** zum Zwecke der dichtenden Festlegung der Selbstanbohrschelle auf der Mantelfläche (6) des Rohrs (7) eines von zwei komplementären Dichtmitteln, Dichtfläche und Dichtring, im Bereich der ersten Anschlußöffnung (5) vorgesehen ist und daß das jeweils andere Dichtmittel am Absperrventil (2) vorgesehen ist.

21. Selbstanbohrschelle nach einem der Ansprüche 2 bis 20, **dadurch gekennzeichnet, daß** das Absperrventil (2) gegen das Bohrelement (1) mittels eines ersten Satzes von Ringdichtungen (16a) abgedichtet ist.

22. Selbstanbohrschelle nach einem der Ansprüche 2 bis 21, **dadurch gekennzeichnet, daß** die Bedienspindel (3) gegen das Schellengehäuse (4) mittels eines zweiten Satzes von Ringdichtungen (16b) abgedichtet ist.

23. Selbstanbohrschelle nach einem der Ansprüche 1 bis 22, **dadurch gekennzeichnet, daß** Teile der Selbstanbohrschelle zumindest in Bereichen, in denen sie mit einem in dem Rohr (7) geführten Medium in Kontakt kommen, aus einem korrosionsbeständigen Material, insbesondere aus nichtrostendem Stahl, bestehen.

24. Selbstanbohrschelle nach einem der Ansprüche 1 bis 23, **dadurch gekennzeichnet, daß** das Schellengehäuse zweiteilig ausgeführt ist.

25. Selbstanbohrschelle nach einem der Ansprüche 1 bis 24, **dadurch gekennzeichnet, daß** die Bedienspindel (3) durch Motorantrieb, insbesondere durch einen lösbar an der Bedienspindel (3) festlegbaren Motor, drehbar ist.

## Claims

1. Self-tapping clamp for tapping into pipes, comprising
a drilling element (1),
a shut-off valve (2),
a rotatable operating spindle (3) by means of which the shut-off valve (2) can be operated and the drilling element (1) can be driven,
a clamp body (4) having at least two connecting openings, the clamp body (4) being able to be fixed, in a sealed manner, to a circumferential surface (6) of a pipe (7) by a first connecting opening (5), and the drilling element (1) and the shut-off valve (2) being received by the clamp body (4),
there being a fixed correlation between a rotary movement of the shut-off valve (2) about an axis of rotation and a forced movement of the shut-off valve (2) in the direction defined by the axis of rotation,
**characterised in that**
the drilling element (1) and the shut-off valve (2) can, by means of a coupling element (8), be coupled together in a torque-transmitting manner and can be uncoupled from one another, and **in that** the drilling element (1) can be moved axially independently of a rotary movement of the drilling element (1).

2. Self-tapping clamp according to claim 1, **characterised in that** the drilling element (1) and the shut-off valve (2) are concentrically arranged about an axis (9) and are able to be moved in the direction of the axis (9)

3. Self-tapping clamp according to claim 2, **characterised in that** the rotary movement of the operating spindle (3) can be transmitted to the drilling element (1) by means of form-fitting means, in particular axially directed longitudinal faces (20).

4. Self-tapping clamp according to claim 2 or 3, **characterised in that** the drilling element (1) is held in the shut-off valve (2) in such a way as to be movable axially relative to the shut-off valve (2).

5. Self-tapping clamp according to one of claims 2 to 4, **characterised in that** the drilling element (1) consists of a lower drilling element half (1b) and an upper drilling element half (1c) connected thereto by positive interengagement.

6. Self-tapping clamp according to one of claims 2 to 5, **characterised in that** the shut-off valve (2) consists of a lower shut-off valve half (2a) and an upper shut-off valve half (2b) able to be screwed to the latter.

7. Self-tapping clamp according to one of claims 4 to 6, **characterised in that** there is applied to the drilling element (1) and the shut-off valve (2), by means of a spring element (10), a force which forces the drilling element (1) and the shut-off valve (2) apart in the axial direction.

8. Self-tapping clamp according to claim 7, **characterised in that** the spring element (10) is held in a recess concentric with the axis (9) and is supported axially on the one hand on the shut-off valve (2) and on the other hand on the drilling element (1).

9. Self-tapping clamp according to claim 8, **characterised in that** the spring element (10) is in disc-spring form.

10. Self-tapping clamp according to claim 8, **characterised in that** the spring element (10) is in coil-spring form.

11. Self-tapping clamp according to one of claims 7 to 10, **characterised in that** a bearing means (11) is inserted at least between the spring element (10) and one of the parts, the drilling element (1) and shut-off valve (2).

12. Self-tapping clamp according to claim 11, **characterised in that** the bearing means (11) is a ball or roller bearing.

13. Self-tapping clamp according to claim 11, **characterised in that** the bearing means (11) is an anti-friction disc of plastics material, bronze or some other suitable material.

14. Self-tapping clamp according to one of claims 7 to 13, **characterised in that** the coupling element (8) also forms an abutment, as far as which the drilling element (1) and the shut-off valve (2) can be forced apart by the spring element (10).

15. Self-tapping clamp according to claim 14, **characterised in that**, when in the abutment formed by the coupling element, the drilling element (1) and the shut-off valve (2) are coupled by the coupling element (8) in a torque-transmitting manner.

16. Self-tapping clamp according to one of claims 2 to 15, **characterised in that** the coupling element (8) comprises a first dog-carrying ring (12) which is formed on the drilling element (1) and a second dog-carrying ring (13) which is situated opposite the first dog-carrying ring (12) and is formed on the shut-off valve (2), the dog-carrying rings (12, 13) each having axially projecting dogs (12a, 13a) and, when in suitable angular positions relative to one another and when the drilling element (1) is in an appropriate axial position relative to the shut-off valve (2), being in torque-transmitting interengagement with one other.

17. Self-tapping clamp according to claim 16, **characterised in that** there is provided at the coupling element (8) a safety travel which, when the shut-off valve and drilling element are in abutment, is defined by the mutual overlap between the dogs (12a, 13a) on the dog-carrying rings (12, 13) situated opposite one another, so that if, starting from the abutting position, the drilling element (1) is displaced axially towards the shut-off valve (2) in opposition to the force from the spring element (10) by a travel less than the safety travel, the torque-transmitting coupling of the drilling element (1) and the shut-off valve (2) continues to exist, and so that, after axial displacement by a travel greater than the safety travel, the shut-off valve (2) and the drilling element (1) are uncoupled.

18. Self-tapping clamp according to one of claims 2 to 17, **characterised in that** a drilling head (1a) is arranged on the drilling element (1) in the form of a separate component connected to the lower drilling element half (1b) by positive interengagement.

19. Self-tapping clamp according to one of claims 2 to 18, **characterised in that** the shut-off valve (2) is held at the body (4) of the clamp by means of a thread (14), the thread (14) extending concentrically to the axis (9) so that, when the shut-off valve (2) is turned, the shut-off valve (2) is also moved axially.

20. Self-tapping clamp according to one of claims 2 to 19, **characterised in that**, for the purpose of fixing the self-tapping clamp to the circumferential surface (6) of the pipe (7) in a sealed manner, one of two complementary sealing means, a sealing surface and a sealing ring, is provided in the region of the first connecting opening (5), and **in that** the respective other sealing means is provided on the shut-off valve (2).

21. Self-tapping clamp according to one of claims 2 to 20, **characterised in that** the shut-off valve (2) is sealed against the drilling element (1) by means of a first set of ring seals (16a).

22. Self-tapping clamp according to one of claims 2 to 21, **characterised in that** the operating spindle (3) is sealed against the body (4) of the clamp by means of a second set of ring seals (16b).

23. Self-tapping clamp according to one of claims 1 to 22, **characterised in that**, at least in regions where they come into contact with a medium carried in the pipe (7), parts of the self-tapping clamp are made of a corrosion-resistant material, and in particular of stainless steel.

24. Self-tapping clamp according to one of claims 1 to 23, **characterised in that** the body of the clamp is made in two parts.

25. Self-tapping clamp according to one of claims 1 to 24, **characterised in that** the operating spindle (3) is able to be turned by motor drive, and in particular by a motor which can be detachably fixed to the operating spindle (3).

## Revendications

1. Étrier de perçage automatique destinée à percer des tuyaux, lequel étrier comporte
un élément de perçage (1),
un clapet d'arrêt (2),
une broche de commande (3) permettant de commander le clapet d'arrêt (2) et d'entraîner l'élément de perçage (1),
un boîtier d'étrier (4) comportant au moins deux ouvertures de raccordement, le boîtier d'étrier (4) pouvant être fixé de façon étanche sur la surface d'enveloppe (6) d'un tube (7) au moyen d'une première ouverture de raccordement (5) et le boîtier d'étrier (4) recevant l'élément de perçage (1) et le clapet d'arrêt (2),
un mouvement en rotation du clapet d'arrêt (2) autour d'un axe de rotation étant associé à un déplacement forcé du clapet d'arrêt (2) en direction de l'axe de rotation,
**caractérisé en ce qu'**un élément de couplage (8) permet de réaliser un couplage et un découplage en rotation entre l'élément de perçage (1) et le clapet d'arrêt (2) et **en ce que** l'élément de perçage (1) est mobile axialement indépendamment d'un mouvement de rotation de l'élément de perçage (1).

2. Étrier de perçage automatique selon la revendication 1, **caractérisé en ce que** l'élément de perçage (1) et le clapet 'arrêt (2) sont disposés concentriquement autour d'un axe (9) et sont mobile en direction de cet axe (9).

3. Étrier de perçage automatique selon la revendication 2, **caractérisé en ce que** le mouvement en rotation de la broche de commande (3) peut être transféré à l'élément de perçage (1) par des moyens à verrouillage de forme, en particulier des surfaces longitudinales (20) orientées axialement.

4. Étrier de perçage automatique selon la revendication 2 ou 3, **caractérisé en ce que** l'élément de perçage (1) est reçu dans le clapet d'arrêt de façon à pouvoir se déplacer axialement par rapport au clapet d'arrêt.

5. Étrier de perçage automatique selon l'une des revendications 2 à 4, **caractérisé en ce que** l'élément de perçage (1) est constitué d'une moitié inférieure d'élément de perçage (1b) et d'une moitié supérieure d'élément de perçage (1c) reliée à la moitié inférieure d'élément de perçage (1b) par verrouillage de forme.

6. Étrier de perçage automatique selon l'une des revendications 2 à 5, **caractérisé en ce que** le clapet d'arrêt (2) est constitué d'une moitié inférieure de clapet d'arrêt (2a) et d'une moitié supérieure de clapet d'arrêt (2a) pouvant être vissée sur la moitié inférieure (2a) de clapet d'arrêt.

7. Étrier de perçage automatique selon l'une des revendications 4 à 6, **caractérisé en ce que** l'élément de perçage (1) et le clapet d'arrêt (2) sont soumis, au moyen d'un élément élastique (10), à une force qui écarte l'élément de perçage (1) et le clapet d'arrêt (2) dans une direction axiale.

8. Étrier de perçage automatique selon la revendication 7, **caractérisé en ce que** l'élément élastique (10) est reçu dans un évidemment concentrique à l'axe (9) et est soutenu axialement d'une part au niveau du clapet d'arrêt (2) et d'autre part au niveau de l'élément de perçage (1).

9. Étrier de perçage automatique selon la revendication 8, **caractérisé en ce que** l'élément élastique (10) est conformé en rondelle-ressort.

10. Étrier de perçage automatique selon la revendication 8, **caractérisé en ce que** l'élément élastique (10) est conformé en ressort hélicoïdal.

11. Étrier de perçage automatique selon l'une des revendications 7 à 10, **caractérisé en ce qu'**un moyen formant palier (11) est inséré au moins entre l'élément élastique (10) et l'une des pièces parmi l'élément de perçage (1) et le clapet d'arrêt (2).

12. Étrier de perçage automatique selon la revendication 11, **caractérisé en ce que** le moyen formant palier (11) est un roulement à billes ou un roulement à rouleaux.

13. Étrier de perçage automatique selon la revendication 11, **caractérisé en ce que** le moyen formant palier (11) est un disque de coulissement en matière plastique, en bronze ou en une matière appropriée.

14. Étrier de perçage automatique selon l'une des revendications 7 à 13, **caractérisé en ce que** l'élément de couplage (8) permet en même temps de réaliser une butée jusqu'à laquelle l'élément de perçage (1) et le clapet d'arrêt (2) sont écartés l'un de l'autre axialement par l'élément élastique (10).

15. Étrier de perçage automatique selon la revendication 14, **caractérisé en ce qu'**un couplage à couple de rotation entre l'élément de perçage (1) et le clapet d'arrêt (2) via l'élément de couplage (8) est constitué par la butée formée par l'élément de couplage.

16. Étrier de perçage automatique selon l'une des revendications 2 à 15, **caractérisé en ce que** l'élément de couplage (8) est constitué d'une première bague à cliquet (12) conformée au niveau de l'élément de perçage (1) et d'une deuxième bague à cliquet (13) conformée au niveau du clapet d'arrêt (12) et en face de la première bague à cliquet (12), lesquelles bagues à cliquet comportent des cliquets (12a, 13a) saillant axialement, les bagues à cliquet (12, 13) s'engageant l'une par rapport à l'autre dans une position angulaire appropriée et l'une dans l'autre dans une position axiale correspondante de l'élément de perçage (1) par rapport au clapet d'arrêt (2).

17. Étrier de perçage automatique selon la revendication 16, **caractérisé en ce qu'**il est prévu au niveau de l'élément de couplage (8) une course de sécurité qui est définie par le chevauchement mutuel des cliquets (12a, 13a) des bagues à cliquet (12, 13), disposée l'une en face de l'autre, lorsque le clapet d'arrêt et l'élément de perçage se trouvent en butée de sorte que le couplage par couple de rotation entre l'élément de perçage (1) et le clapet d'arrêt (2) existe toujours lorsque l'élément de perçage (1) se déplace axialement depuis la butée vers le clapet d'arrêt (2), en s'opposant à la force de l'élément élastique (10), d'une course inférieure à la course de sécurité et **en ce que** le clapet d'arrêt (2) et l'élément de perçage (1) sont découplés après un déplacement axial d'une course supérieure à la course de sécurité.

18. Étrier de perçage automatique selon l'une des revendications 2 à 17, **caractérisé en ce que** au niveau de l'élément de perçage, une tête de perçage (1a) est conformée en composant séparé relié par verrouillage de forme à la moitié inférieure d'élément de perçage (1b).

19. Étrier de perçage automatique selon l'une des revendications 2 à 18, **caractérisé en ce que** le clapet d'arrêt (2) est reçu au niveau du boîtier d'étrier (4) au moyen d'un filetage (14), le filetage (14) s'étendant concentriquement à l'axe (9) de sorte que le clapet d'arrêt (2) est également déplacé axialement lorsque le clapet d'arrêt (2) tourne.

20. Étrier de perçage automatique selon l'une des revendications 2 à 19, **caractérisé en ce qu'**il est prévu au niveau de la première ouverture de raccordement (5) l'un des deux moyens d'étanchéité complémentaires parmi la surface d'étanchéité et la bague d'étanchéité dans le but de fixer de façon étanche l'étrier de perçage automatique sur la surface d'enveloppe (6) du tube (7) et **en ce qu'**il est prévu au niveau du clapet d'arrêt d'autres moyens d'étanchéité.

21. Étrier de perçage automatique selon l'une des revendications 2 à 20, **caractérisé en ce que** le clapet d'arrêt (2) est rendu étanche vis à vis de l'élément de perçage (1) au moyen d'un premier jeu de joints toriques (16a).

22. Étrier de perçage automatique selon l'une des revendications 2 à 21, **caractérisé en ce que** la broche de commande (3) est rendue étanche vis à vis du boîtier d'étrier au moyen d'un deuxième jeu de joints toriques (16b).

23. Étrier de perçage automatique selon l'une des revendications 1 à 22, **caractérisé en ce que** des pièces de l'étrier de perçage automatique sont en un matériau résistant à la corrosion au moins dans des zones dans lesquelles ces pièces viennent en contact avec un médium guidé dans le tube (7).

24. Étrier de perçage automatique selon l'une des revendications 1 à 23, **caractérisé en ce que** le boîtier d'étrier est réalisé en deux parties.

25. Étrier de perçage automatique selon l'une des revendications 1 à 24, **caractérisé en ce que** la broche de commande (3) est mise en rotation par un entraînement par moteur, en particulier par un moteur pouvant être fixé de façon amovible à la broche de commande (3).
